# EUROPÄISCHE PATENTANMELDUNG

(11) **EP 3 748 803 A1**
(43) Veröffentlichungstag der Anmeldung: **09.12.2020**
(21) Anmeldenummer: 20174859.7
(22) Anmeldetag: 15.05.2020
(51) Int. Cl.: H02J 7/00, B60L 53/62, B60L 53/65, B60L 53/68, B60L 58/16

(54) **VERFAHREN UND VORRICHTUNG ZUR DURCHFÜHRUNG EINER LADESTRATEGIE FÜR ENERGIESPEICHER**

(30) Priorität: 04.06.2019 DE 102019208071
(71) Anmelder: Robert Bosch GmbH, 70442 Stuttgart (DE)
(72) Erfinder: Trenkle, Lothar, 77833 Ottersweier (DE)

(57) **Zusammenfassung**

Gemäß der vorliegenden Erfindung wird ein Lademanagement mit einem Steuerungsverfahren zur Steuerung beziehungsweise Regelung der Beladung eines elektrischen Energiespeichers mit elektrischer Energie beansprucht. Darüber hinaus soll ebenfalls eine Ladevorrichtung, die ein derartiges Lademanagement beziehungsweise Steuerungsverfahren verwendet sowie ein System bestehend aus Ladevorrichtung und einem mit dieser Ladevorrichtung in Verbindung stehendem mobilem Endgerät beansprucht werden, bei dem wenigstens ein Teil des erfindungsgemäßen Verfahrens auf dem mobilen Endgerät abläuft.

## Beschreibung

Die Erfindung betrifft eine Ladestrategie für einen Energiespeicher, beispielsweise einen Akkumulator, sowie einen Vorrichtung beziehungsweise ein System, welches diese Ladestrategie durchführt.

### Stand der Technik

Um Energiespeicher wie Akkumulatoren und Batterien mit elektrischer Energie zu beladen können unterschiedliche Ladestrategien zum Einsatz kommen. Die einfachste Methode besteht dabei darin, den Energiespeicher mittels eines geeigneten Ladegeräts ungeregelt mit der zur Verfügung stehenden Energie zu laden, bis die maximale Beladung erreicht ist. Bei einer derartigen Beladung kann es jedoch aufgrund von chemischen Stress in den Zellen des Energiespeichers zu Überhitzungen im Energiespeicher und somit zur Beschädigung des Energiespeichers kommen. Aus diesem Grund kann in einem weiteren bekannten Verfahren die Temperatur und/oder der innere Druck der Zellen erfasst werden, um in Abhängigkeit der so erfassten Größen die Energie, genauer gesagt, die Strommenge pro Zeiteinheit bei der Beladung zu reduzieren. Weiterhin besteht die Möglichkeit, die Beladung in Abhängigkeit vom Ladezustand zu steuern.

Es ist bekannt, dass durch ein langsames Laden des Energiespeichers dessen Lebensdauer erhöht wird. Um jedoch den Energiespeicher schnell aufzuladen, bieten viele Ladegeräte einen Schnellademodus an, der auf Kosten der Lebensdauer des Energiespeichers innerhalb kurzer Zeit einen hohen Ladezustand ermöglicht.

Bei Lithium-Ionen Batterien wirkt sich eine Nutzung der Kapazität zwischen ca. 10 % und 90 % als besonders lebensverlängert aus. Dies kann neben der Nutzung auch bei der Beladung berücksichtigt werden, indem ein Energiespeicher mit Lithium-Ionen Zellen üblicherweise nur zu 90 % geladen wird.

Mit der vorliegenden Erfindung soll ein Verfahren, eine Vorrichtung sowie ein System beschrieben werden, mit dem anlass- und situationsbezogen eine Beladung eines Energiespeichers ermöglicht wird.

### Offenbarung der Erfindung

Gemäß der vorliegenden Erfindung wird ein Lademanagement mit einem Steuerungsverfahren zur Steuerung beziehungsweise Regelung der Beladung eines elektrischen Energiespeichers mit elektrischer Energie beansprucht. Darüber hinaus soll ebenfalls eine Ladevorrichtung, die ein derartiges Lademanagement beziehungsweise Steuerungsverfahren verwendet sowie ein System bestehend aus Ladevorrichtung und einem mit dieser Ladevorrichtung in Verbindung stehendem mobilem Endgerät beansprucht werden, bei dem wenigstens ein Teil des erfindungsgemäßen Verfahrens auf dem mobilen Endgerät abläuft.

Das beanspruchte Steuerungsverfahren wird dazu verwendet, eine Ladestrategie zur Steuerung bzw. Regelung der Beladung des Energiespeichers abzuleiten beziehungsweise festzulegen. Eine derart abgeleitete oder festgelegte Ladestrategie kann sowohl auf individuelle Anforderungen des Nutzers, auf Rahmenbedingungen bei der elektrischen Stromversorgung als auch auf die Reduzierung/Vermeidung der physikalisch/chemische Schädigung des Energiespeichers bei der Beladung hin optimiert werden. Weiterhin ist dadurch ein situationsabhängiges Lademanagement möglich. Zur Festlegung der Ladestrategie oder einer Teil-Ladestrategie wird ein erster aktuellen Beladungszustand des Energiespeichers erfasst. Weiterhin wird erfasst, zu welchem Zielzeitpunkt der Energiespeicher geladen sein soll. Hierzu kann optional auch vorgesehen sein, dass der Energiespeicher zu diesem Zeitpunkt nicht zu 100 % geladen sein soll sondern zu einem anderen wählbaren oder vorgegebenen Beladungszustand. Das Verfahren legt anschließend aus zumindest dem aktuellen Beladungszustand sowie dem Zielzeitpunkt beziehungsweise dem bis zum Zielzeitpunkt vorliegenden Zeitraum eine Ladestrategie fest, mit der die Energieversorgung der Beladung des elektrischen Energiespeichers betrieben werden soll.

Denkbar ist beispielsweise, dass mit dieser Ladestrategie der Energiespeicher nicht sofort geladen wird sondern erst zu einem Zeitpunkt mit der Beladung begonnen wird, an dem eine ununterbrochene Ladung bis zum Zielzeitpunkt möglich ist. Andernfalls könnte bei einer vor dem Zielzeitpunkt erreichten Beladung eine teilweise Entladung eintreten, die ihrerseits durch einen erneuten Start der Beladung kompensiert werden muss. Darüber hinaus ist auch möglich, mittels der Ladestrategie den Beladungszustand des Energiespeichers in einem Optimum zu halten. Wie eingangs bereits ausgeführt, ist hierbei beispielsweise bekannt, dass eine Beladung von 90 % der maximalen Beladungskapazität sowohl hinsichtlich der eintretenden automatischen Entladung als auch hinsichtlich der Betrachtung der Lebensdauer der physikalisch/chemischen Zellen des Energiespeichers besonders vorteilhaft ist.

In Weiterbildungen der Erfindung können zusätzliche Größen, Werte und allgemein Informationen erfasst werden, mit der die Ladestrategie verfeinert und weiter optimiert werden können.

So ist möglich, einzelne oder mehrere Betriebsparameter des Energiespeichers zu erfassen, um eine Schädigung des Energiespeichers während und durch die Beladung zu verhindern oder zu verringern. So kann insbesondere vorgesehen sein, die Temperatur und/oder der innere Gasdruck des Energiespeichers oder einzelner Zellen im Energiespeicher zu erfassen. Weiterhin ist möglich, einen zweiten aktuellen Beladungszustand während der Beladung zu erfassen, um gegebenenfalls die Ladestrategie abzuändern oder zu regeln.

Neben den Betriebsparametern kann auch der physikalisch und/oder chemische Aufbau des Energiespeichers relevant zur Ableitung der Ladestrategie sein. Dies kann besonders vorteilhaft sein, wenn an der entsprechenden Ladevorrichtung unterschiedliche Arten von Energiespeichern geladen werden können. So kann vorgesehen sein, dass wenigstens eine Information über die bauliche Eigenschaft des Energiespeichers bei der Festlegung der Ladestrategie berücksichtigt wird. Hierbei kann es sich beispielsweise um die Art der im Energiespeicher verbauten Zellen, des generellen Aufbaus des Energiespeichers oder ein vorgegebener zugelassener Beladungszustand oder zugelassener Beladungsstrom handeln.

In einer weiteren Ausgestaltung kann vorgesehen sein, dass die Ladestrategie zusätzlich die Entnahmehistorie der Energie aus dem Energiespeicher berücksichtigt. Hierzu kann die Entnahmehistorie der letzten zusammenhängenden Energieentnahme erfasst und berücksichtigt werden. Es ist jedoch auch möglich, das ein gemittelter Wert oder ein Verlauf von mehreren Energieentnahmen berücksichtigt wird. Hierbei kann der Wert oder der Verlauf sowohl über alle Energieentnahmen als auch über im Wesentlichen gleichartige Energieentnahmen erfolgen. Optional oder zusätzlich kann auch vorgesehen sein, dass insbesondere der Nutzer einen Wert oder einen zeitlichen Verlauf für die bisherige Entnahme vorgibt oder auswählt.

Wie die zurückliegende Entnahmehistorie kann auch die geplante Energieentnahme zur Ableitung bzw. Festlegung der Ladestrategie herangezogen werden. Hierzu kann beispielsweise der Nutzer des Energiespeichers einen Entnahmewunsch vorgeben, der vom Verfahren erfasst und berücksichtigt wird. Optional kann auch vorgesehen sein, dass der Energiebedarf aus anderen Prognosen automatisch ermittelt wird und in einen Entnahmewunsch umgerechnet wird. Für diese Zwecke kann sowohl ein einzelner Wert bzw. eine einzelne Größe verwendet werden, die diesen Entnahmewunsch repräsentiert oder ein zeitlicher Verlauf definiert werden, bei dem die Energieentnahme mit einer zeitlichen Prognose verbunden ist. Alternativ oder zusätzlich kann auch vorgesehen sein, dass lediglich ein Zeitraum oder ein Zeitpunkt erfasst wird, in dem die Energie entnommen werden soll.

In einer besonderen Ausgestaltung der Erfindung kann die Ladestrategie während des Ladens angepasst oder verändert werden. Dies hat den Vorteil, das sowohl auf den Ladevorgang reagiert werden kann und die Beladung geregelt werden kann als auch, dass unterschiedliche Beladungsvorgänge verwendet werden können, die den Energiespeicher weniger belasten. So ist denkbar, dass bis zu einem vorgegebenen Beladungszustand zunächst eine erste Teil-Ladestrategie verwendet wird und beim Erreichen eines gewählten Beladungsschwellenwerts eine zweite Teil-Ladestrategie angewandt wird.

Mit dieser zweigeteilten Ladestrategie kann in einem ersten Beladungsvorgang der Energiespeicher auf eine Mindestbeladung beladen werden, unabhängig von der physikalischen und/oder chemischen Belastung und der damit verbundenen Schädigung der Zellen im Energiespeicher. Bei Erreichen dieser Mindestbeladung wird anschließend der Ladevorgang in einen schonenderen Modus umgeschaltet, z.B. indem eine geringere Stromstärke und/oder Spannung verwendet wird. Hierbei kann diese Mindestbeladung fest vorgegeben sein oder wählbar ausgestaltet sein. Alternativ kann auch vorgesehen sein, dass die erste Ladestrategie während einem ersten vorgebbaren Zeitraum und die zweite Ladestrategie nach diesem ersten vorgebbaren Zeitraum angewandt wird.

Optional kann vorgesehen sein, dass während des ersten Zeitraums keine Beladung stattfindet, so dass die Beladung erst mit der zweiten Teil-Ladestrategie erfolgt. Dies kann sinnvoll sein, wenn die Beladung durchgängig erfolgen soll und der Zielzeitpunkt derart weit in der Zukunft liegt, dass ein früher Start des Ladevorgangs nicht notwendig ist. Somit wird ein Entladevorgang bei einem zu frühen Erreichen der maximalen oder gewünschten Beladung vermieden.

In einer Fortbildung der Erfindung kann vorgesehen sein, dass mehr als zwei Phasen zur Beladung des Energiespeichers vorgesehen sind. Zum Wechsel der einzelnen Phasen kann dabei jeweils ein anderer Beladungszustand und/oder ein eigener Zeitraum vorgesehen sein. Optional kann auch vorgesehen sein, dass in einem Zeitraum keine Beladung vorgesehen ist, so dass zwischen der ersten Teil-Ladestrategie und der zweiten Teil-Ladestrategie ein Zeitraum vorgesehen ist, bei dem keine Beladung stattfindet. Dies kann besonders von Vorteil sein, wenn der Zielzeitpunkt, an dem die Beladung des Energiespeichers abgeschlossen sein soll weiter in der Zukunft liegt als eine normale, schonende Beladung benötigt.

Wie bereits ausgeführt, kann das erfindungsgemäße Steuerungsverfahren in einer Ladevorrichtung durchgeführt werden, z.B. in einem Steuergerät, welches die Energieabgabe an den Energiespeicher steuert bzw. regelt.

In einer weiteren Ausführung kann vorgesehen sein, dass die Ladevorrichtung und ein mobiles Endgerät zusammen ein System bilden, welche das erfindungsgemäße Lademanagement beziehungsweise das Steuerungsverfahren gemeinsam ausführen. Hierzu ist wenigstens eine unidirektionale Verbindung, z.B. drahtlos, erforderlich, bei dem Daten vom mobilen Endgerät an die Ladevorrichtung und gegebenenfalls zurück übertragen werden können.

So kann vorgesehen sein, dass die für die Ableitung der Ladestrategie bzw. der Teil-Ladestrategie erforderlichen Informationen wenigstens teilweise über das mobile Endgerät eingegeben und an die Ladevorrichtung übersandt werden. Es ist jedoch auch denkbar, dass das mobile Endgerät neben der Erfassung der relevanten Informationen auch die Ladestrategie ableitet beziehungsweise festlegt. In diesem Fall würde die Ladestrategie an die Ladevorrichtung gesandt werden, so dass diese die Steuerung beziehungsweise Regelung der Beladung des Energiespeichers anhand dieser Ladestrategie vornimmt.

Als mögliche Informationen, die vom mobilen Endgerät erfasst werden können, zählen
- der Zielzeitpunkt, zu dem der Energiespeicher insbesondere mit einem vorgegebenen Beladungszustand geladen sein soll, und/oder
- einen vorgegebenen minimalen und/oder maximalen Beladungszustand, und/oder
- eine Ladedauer, und/oder
- einen Beladungsschwellenwert für die Änderung der Ladestrategie, und/oder
- einen Betriebsparameter des Energiespeichers, und/oder
- eine bauliche Eigenschaft des Energiespeichers, und/oder
- eine bauliche Eigenschaft der Ladevorrichtung, und/oder
- eine Entnahmehistorie des Energiespeichers, und/oder
- eine Nutzungshistorie des Energiespeichers, und/oder
- ein Entnahmewunsch der Energie, und/oder
- ein Grad der Optimierung der Ladestrategie.

Diese Informationen kann der Nutzer manuell eingeben und/oder aus einer Datenbank auswählen. Teilweise kann vorgesehen sein, dass Parameter der Ladevorrichtung und/oder des Energiespeichers zuvor vom mobilen Endgerät über die dann direktionale Verbindung eingelesen beziehungsweise erfasst werden, so dass sie zur Auswahl oder zur Festlegung der Ladestrategie vorliegen.

Weitere Vorteile ergeben sich aus der nachfolgenden Beschreibung von Ausführungsbeispielen bzw. aus den abhängigen Patentansprüchen.

### Kurze Beschreibung der Zeichnungen

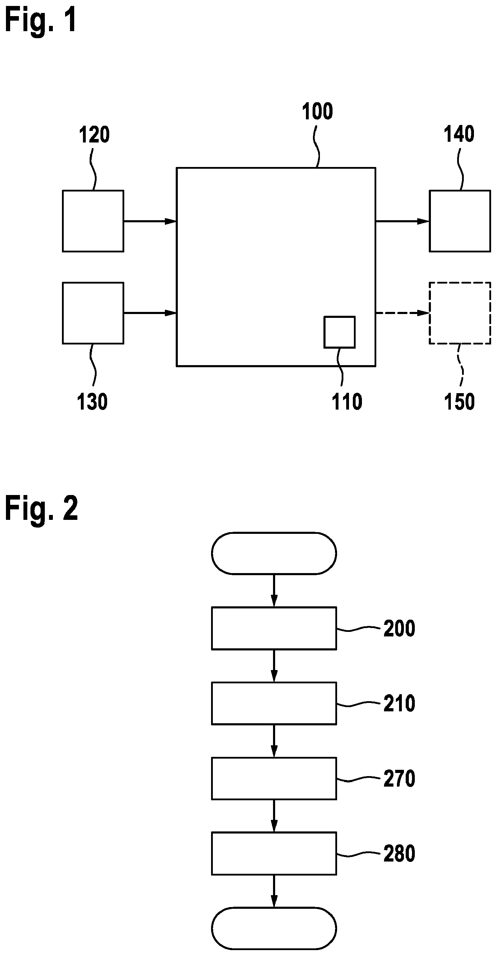

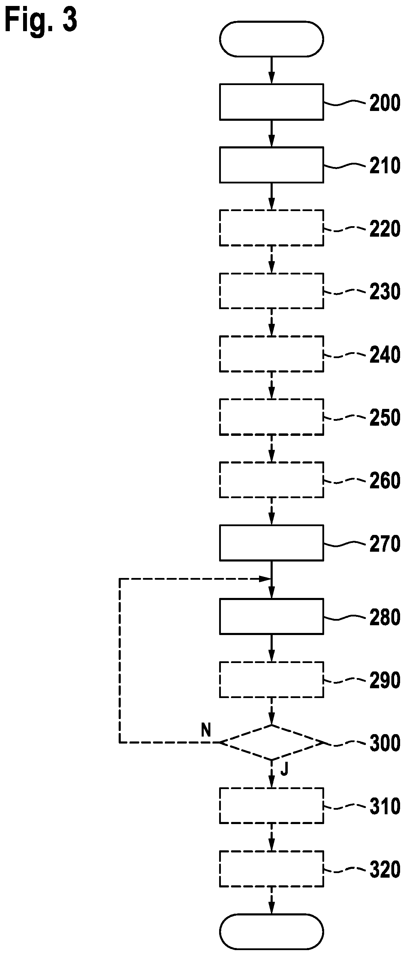

Die Figur 1 zeigt in einem Blockschaltbild ein mögliches erfindungsgemäßes Steuergerät zur Realisierung der Steuerung der Beladung eines Energiespeichers beziehungsweise ein System, bei dem ein entsprechendes Steuergerät eingebunden ist. Mit dem Flussdiagramm in der Figur 2 wird ein erstes Ausführungsbeispiel des erfindungsgemäßen Steuerungsverfahrens beschrieben. Das Flussdiagramm der Figur 3 beschreibt mehrere alternative weitere Ausführungsbeispiele des erfindungsgemäßen Steuerungsverfahrens.

### Ausführungsformen der Erfindung

Mit der nachfolgend zu beschreibenden Erfindung soll ein Verfahren sowie eine Vorrichtung gezeigt werden, mittels dem ein Energiespeicher sowohl nutzerindividuell als auch lebensdauernd verlängert beladen werden kann. Hierzu wird die Erfindung am Beispiel eines Akkumulators als Energiespeicher beschrieben, wie er u.a. bei elektrifizierten Kraftfahrzeugen oder Fahrrädern eingesetzt werden kann.

Zur Beladung des Energiespeichers 140 beziehungsweise eines Akkumulators kann eine Ladevorrichtung mit einem Steuergerät 100 vorgesehen sein. Alternativ kann auch ein separates Steuergerät vorgesehen sein, welches auf die Ladevorrichtung z.B. ein Ladegerät 150 zur Steuerung der Beladung einwirkt. Das Steuergerät 100 kann einen Speicher 110 aufweisen, welcher in einer Datenbank wenigstens einen Teil der für die Steuerung und/oder die Ableitung/Festlegung der Ladestrategie relevanten Daten aufweist. Der Speicher 110 kann darüber hinaus auch dazu verwendet werden, die erfassten Informationen zur Festlegung der Ladestrategie abzuspeichern. Die für die Festlegung der Ladestrategie erforderlichen Informationen können zusätzlich oder alternativ mittels einer Verbindung aus dem Energiespeicher 120 ausgelesen und somit erfasst werden. Hierbei kann es sich beispielsweise um den Beladungszustand, die Temperatur oder den Druck in dem Energiespeicher, die Entnahmehistorie und/oder die Art und den Aufbau des Energiespeichers handeln. Optional oder zusätzlich können die Informationen auch von einem mobilen Endgerät 130 erfasst werden. Über das mobile Endgerät 130 können der Zielzeitpunkt, der Entnahmezeitpunkt, der Entnahmewunsch der Energie, eine Mindest- und/oder Maximal-Beladungskapazität und/oder eine Grad der Optimierung erfasst werden. Diese Angeben beziehungsweise Informationen können durch den Nutzer des mobilen Endgeräts manuell eingegeben oder aus einer Datenbank ausgewählt werden, bevor sie an das Steuergerät 100 übermittelt werden. Hierzu eignet sich bei einem Smartphone beispielsweise eine entsprechende App. Über die App lassen sich gegebenenfalls auch spezielle Ladestrategien auswählen, die mit entsprechenden Symbolen oder Piktogrammen verbunden sind. So könnte ein Hase eine schnelle Ladestrategie repräsentieren, während ein Igel oder eine Schnecke jeweils langsamere und somit schonendere Ladestrategien repräsentieren.

Der wesentliche Kern der Erfindung besteht dabei darin, dass ein Zielzeitpunkt angegeben wird, zu dem der Energiespeicher 140 für die vorgesehene Nutzung geladen sein soll. Dieser Zielzeitpunkt kann alternativ auch aus der Datenbank bzw. dem Speicher 110 abgeleitet werden, z.B. indem die Nutzung des Energiespeichers regelmäßig zur gleichen Zeit stattfindet, oder durch den Nutzer im mobilen Endgerät 130 eingegeben werden. Hierzu wird in der Figur 2 ein erstes grundlegendes erfindungsgemäße Verfahren anhand eines Flussdiagramms beschrieben.

Zunächst findet nach dem Start des Verfahrens im Schritt 200 die Erfassung des ersten aktuellen Beladungszustands des Energiespeichers statt. Im nächsten Schritt 210 wird der gewünschte Zielzeitpunkt erfasst, zu dem der Energiespeicher geladen werden soll. Hierzu kann optional davon ausgegangen werden, dass der Energiespeicher auf 100 % Kapazität geladen werden soll. Es ist jedoch auch denkbar, dass der Energiespeicher auch zu einem anderen vorgegebenen oder wählbaren Beladungszustand aufgeladen werden soll. In einem nachfolgenden Schritt 270 wird in Abhängigkeit von dem bis zum Zielzeitpunkt ausstehenden Zeitraum sowie dem ersten aktuellen Beladungszustand eine Ladestrategie festgelegt, die die Beladung des Energiespeichers hinsichtlich des physikalischen und chemischen Stresses für den Energiespeicher reduziert und somit optimiert. Diese abgeleitete beziehungsweise festgelegte Ladestrategie wird im nächsten Schritt 280 für die Steuerung und/oder Regelung der Beladung des Energiespeichers verwendet. Die Beladung kann mit Erreichen des maximalen Beladungszustands oder eines Ziel-Beladungszustands beendet werden.

Zu vorstehendem Ausführungsbeispiel sei erwähnt, dass die Schritte 200 und 210 sowohl parallel aus auch in der Reihenfolge getauscht durchgeführt werden können.

Basierend auf diesem Steuerungsverfahren gemäß der Figur 2 lassen sich verschiedene Alternativverfahren ableiten, die einzeln miteinander kombiniert werden können. Entsprechend ist in der Figur 3 ein Flussdiagramm aufgezeigt, welches neben den aus der Figur 2 bekannten Schritte 200 und 210 sowie 270 und 280 weitere optionale Schritte aufweist.

Neben der Erfassung des Zielzeitpunkts im Schritt 210 kann in einem weiteren Schritt 220 wenigstens ein Betriebsparameter des Energiespeichers erfasst werden. Indem dieser Betriebsparameter bei der Festlegung der Ladestrategie in Schritt 270 mit berücksichtigt wird, kann ein Schaden beim Beladen vermieden werden. Gleiches gilt für den weiteren optionalen Schritt 230, bei dem die baulichen Eigenschaften des Energiespeichers bei der Festlegung der Ladestrategie verwendet werden. So sind unterschiedlich ausgeführte chemische Zellen innerhalb des Energiespeichers mit unterschiedlichen Strömen, Spannungen oder deren zeitlichen Verläufen zur Beladung anzusteuern.

Weitere optionale Ausgestaltungen betreffen die Berücksichtigung der Energie-Entnahmehistorie im Schritt 240 sowie der beabsichtigten Energieentnahme im Sinne eine Entnahmewunsches in Schritt 250. Beide Schritte können separat oder in Kombination bei der Festlegung der Ladestrategie in Schritt 270 herangezogen werden. Als Entnahmehistorie kann beispielsweise der zeitliche Verlauf der letzten zusammenhängenden Energieentnahme oder deren durchschnittlicher Wert verwendet werden. Es ist jedoch auch möglich, die Energieentnahme über mehrere im Wesentlichen gleichartige Entnahmevorgänge zu mitteln, z.B. während gleicher Nutzungsbedingungen. Die Benutzungshistorie eines Akkumulators für ein Elektrofahrrad könnte beispielsweise während eine täglichen Fahrt zur Arbeit erfasst werden, um daraus die durchschnittlich benötige Kapazität des Akkumulators abzuleiten, auf den dieser mindestens geladen werden muss.

Optional kann auch ein Schritt 260 vorgesehen sein, in dem der Nutzer des Energiespeichers weitere Informationen angibt, die für die Festlegung der Ladestrategie im Schritt 270 relevant sein könnten. Hierbei sei die Angaben eines Mindestmaß an Beladungskapazität oder ein Maximum des Beladungszustands bzw. der Beladungskapazität genannt. Auch der Grad der Optimierung hinsichtlich der Schädigung des Energiespeichers durch die Beladung kann in diesem Schritt erfasst werden. So kann eine übliche schonende Ladestrategie durchaus situationsbedingt in eine Schnell-Ladestrategie gewechselt werden, wenn der Energiespeicher schnell wieder beladen zur Verfügung stehen soll.

In einem besonderen Ausführungsbeispiel ist der Wechsel der Ladestrategie von einer ersten Teil-Ladestrategie nach Erreichen eines vorgegebenen Beladungszustands oder nach einem vorgegebenen Zeitraum zu einer zweiten Teil-Ladestrategie vorgesehen. Hierbei wird im Schritt 270 die dort festgelegte und im Schritt 280 durchgeführte Ladestrategie als erste Teil-Ladestrategie angesehen. Durch die Erfassung des während dieser Beladung vorliegenden zweiten aktuellen Beladungszustands im Schritt 290 kann im nachfolgenden Schritt 300 überprüft werden, ob der gewünschte Beladungszustand zum Wechsel der Ladestrategie vorliegt. Hierzu wird im Schritt 300 der zweite aktuelle Beladungszustand mit einem vorgebbaren oder wählbaren Beladungsschwellenwert verglichen. Solange der zweite aktuelle Beladungszustand unter diesem Beladungsschwellenwert liegt oder ihn zumindest nicht übersteigt, wird die Beladung weiter mit der ersten Teil-Ladestrategie im Schritt 280 weiter verfolgt. Übersteigt der zweite aktuelle Beladungszustand den Beladungsschwellenwert wird in Schritt 310 eine zweite Teil-Ladestrategie festgelegt, die für die Steuerung der Beladung im nachfolgenden Schritt 320 verwendet wird. Für die Festlegung dieser zweiten Teil-Ladestrategie können die gleichen erfassten Wert, Größen oder Informationen verwendet werden, wir sie bereits für die Festlegung der ersten Teil-Ladestrategie im Schritt 270 verwendet worden sind. Es ist jedoch auch möglich, nur einen Teil der erfassten Wert, Größen oder Informationen zu verwenden, um die erste Teil-Ladestrategie zu verändern und anzupassen. Generell könnte die zweite Teil-Ladestrategie auch eine Regelung der ersten Teil-Ladestrategie darstellen.

Optional kann vorgesehen sein, dass ein weiterer aktueller Beladungszustand erfasst wird und die Beladung mit dem Erreichen des gewünschten Beladungszustands, z.B. 90 % oder 100 % beendet wird. Statt der Erfassung des Beladungszustands kann auch der Strom erfasst werden, mit dem der Energiespeicher beladen wird. Wird hierbei erfasst, das sich der fließende Strom reduziert, ist das ein Zeichen dafür, dass der Energiespeicher keine Energie mehr aufnehmen kann oder in die Sättigung läuft. Im Sinne einer energiesparenden und effizienten Ladestrategie kann daher vorgesehen sein, die Beladung schon vor dem Erreichen von 100 % Beladungszustand zu beenden.

In einer alternativen Ausgestaltung wird in Schritt 300 geprüft, ob ein vorgegebener Zeitraum für die Steuerung der Beladung mit der ersten Teil-Ladestrategie bereits vergangen ist. Hierbei entfällt der Schritt 290, da der Beladungszustand für diese Art der Steuerung unerheblich ist.

## Patentansprüche

1. Steuerungsverfahren zur Beladung eines elektrischen Energiespeichers (120, 120, 140) mit elektrischer Energie, mit den Schritten
• Erfassung (200) eines ersten aktuellen Beladungszustand des Energiespeichers, und
• Erfassung (210) eines Zielzeitpunkts, zu dem der Energiespeicher insbesondere mit einem vorgegebenen Beladungszustand geladen sein soll, und
• Festlegung (270, 310) einer Ladestrategie in Abhängigkeit von dem aktuellen Beladungszustand und der Zeitdauer bis zum Zielzeitpunkt, und
• Steuerung (280, 320) der elektrischen Energie zur Beladung des elektrischen Energiespeichers (120, 140) mittels der Ladestrategie.

2. Steuerungsverfahren nach Anspruch 1, **dadurch gekennzeichnet, dass** das Verfahren zusätzlich die Schritte
• Erfassung (220) wenigstens eines Betriebsparameter des Energiespeichers (120, 140), und
• Festlegung (270, 310) der Ladestrategie zusätzlich in Abhängigkeit von dem wenigstens einen Betriebsparameter,
aufweist,
wobei insbesondere vorgesehen ist, dass als Betriebsparameter
• eine Temperatur,
• ein interner Gasdruck und/oder
• ein zweiter aktueller Beladungszustand
des Energiespeichers erfasst wird.

3. Steuerungsverfahren nach einem der Ansprüche 1 oder 2, **dadurch gekennzeichnet, dass** das Verfahren zusätzlich die Schritte
• Erfassung (230) wenigstens einer baulichen Eigenschaft des Energiespeichers, und
• Festlegung (270, 310) der Ladestrategie zusätzlich in Abhängigkeit von der wenigstens einen baulichen Eigenschaft des Energiespeichers,
aufweist,
wobei insbesondere vorgesehen ist, dass als bauliche Eigenschaft
• die Art des Energiespeichers oder eines Teils des Energiespeichers, und/oder
• ein vorgegebener Beladungszustand
erfasst wird.

4. Steuerungsverfahren nach einem der vorhergehenden Ansprüche, **dadurch gekennzeichnet, dass** das Verfahren zusätzlich die Schritte
• Erfassung (240) einer Entnahmehistorie der Energie aus dem Energiespeicher, und
• Festlegung (270, 310) der Ladestrategie zusätzlich in Abhängigkeit von der Entnahmehistorie,
aufweist,
wobei insbesondere vorgesehen ist, dass als Entnahmehistorie
• der letzten zeitlich zusammenhängenden Energieentnahme aus dem Energiespeicher, und/oder
• ein über mehrere Energieentnahmen gemittelter Wert, und/oder
• ein über mehrere im Wesentlichen gleichartige Energieentnahmen gemittelter Wert, und/oder
• ein vorgebbarer Wert oder vorgebbarer zeitlicher Verlauf der Energieentnahme
erfasst wird.

5. Steuerungsverfahren nach einem der vorhergehenden Ansprüche, **dadurch gekennzeichnet, dass** das Verfahren zusätzlich die Schritte
• Erfassung (250) eines Entnahmewunsches der Energie aus dem Energiespeichers, und
• Festlegung (270, 310) der Ladestrategie zusätzlich in Abhängigkeit von dem Entnahmewunsch,
aufweist,
wobei insbesondere vorgesehen ist, dass als Entnahmewunsch
• die gewünschte Energiemenge, und/oder
• ein Zeitraum, in dem Energie entnommen werden soll, und/oder
• ein Zeitpunkt, an dem die Energieentnahme beginnen soll erfasst wird.

6. Steuerungsverfahren nach einem der vorhergehenden Ansprüche, **dadurch gekennzeichnet, dass** das Verfahren zusätzlich die Schritte
• Festlegung (270) einer ersten Teil-Ladestrategie Ladestrategie in Abhängigkeit von dem ersten aktuellen Beladungszustand und der Zeitdauer bis zum Zielzeitpunkt, und
• Steuerung (280) der elektrischen Energie zur Beladung des elektrischen Energiespeichers anhand der ersten Teil-Ladestrategie, und
• Erfassung (290) eines zweiten aktuellen Beladungszustand des Energiespeichers, und
• Vergleich (300) des zweiten aktuellen Beladungszustands mit einem ersten Beladungsschwellenwert, und
• Festlegung (310) einer zweiten Teil-Ladestrategie in Abhängigkeit des Überschreiten des ersten Beladungsschwellenwerts durch den zweiten aktuellen Beladungszustand von dem zweiten aktuellen Beladungszustand, des zweiten aktuellen Beladungszustands und der Zeitdauer bis zum Zielzeitpunkt, und
• Steuerung (320) der elektrischen Energie zur Beladung des elektrischen Energiespeichers mittels der zweiten Teil-Ladestrategie
aufweist.

7. Steuerungsverfahren nach Anspruch 6, **dadurch gekennzeichnet, dass** zwei aufeinander folgende Teil-Ladestrategien sich hinsichtlich der zur Beladung des Energiespeichers angelegten Stromstärke oder Spannung unterscheiden, wobei insbesondere vorgesehen ist, dass eine erste Teil-Ladestrategie vor einer zweiten Teil-Ladestrategie eine höhere Stromstärke oder eine höhere Spannung aufweist.

8. Steuerungsverfahren nach Anspruch 6 oder 7, **dadurch gekennzeichnet, dass** zwischen der Steuerung der Beladung des Energiespeichers mit zwei Teil-Ladestrategien ein Zeitraum vorgesehen ist, in dem keine Beladung des Energiespeichers vorgesehen ist.

9. Steuerungsverfahren nach einem der vorhergehenden Ansprüche, **dadurch gekennzeichnet, dass** die Ladestrategie hinsichtlich einer Minimierung der Abnutzung oder Schädigung des Energiespeichers optimiert ist.

10. Ladevorrichtung für einen elektrischen Energiespeichers (120, 140) mit elektrischer Energie, mit einem Steuergerät (100), welches eines der Steuerverfahren in einem das Ansprüche 1 bis 9 ausführt, wobei das Steuergerät (100) Mittel zur
• Erfassung (200) eines ersten aktuellen Beladungszustand des Energiespeichers, und
• Erfassung (210) eines Zielzeitpunkts, zu dem der Energiespeicher insbesondere mit einem vorgegebenen Beladungszustand geladen sein soll, und
• Festlegung (270, 310) einer Ladestrategie in Abhängigkeit von dem aktuellen Beladungszustand und der Zeitdauer bis zum Zielzeitpunkt, und
• Steuerung (280, 320) der elektrischen Energie zur Beladung des elektrischen Energiespeichers anhand der Ladestrategie,
aufweist.

11. System zur Steuerung der Beladung eines elektrischen Energiespeichers (120, 140) mit elektrischer Energie, mit
• einer Ladevorrichtung (100, 150), insbesondere nach Anspruch 1, und
• einem mobilen Endgerät (130),
wobei
• die Ladevorrichtung (100, 150) und das mobile Endgerät (130) über wenigstens eine unidirektionale Verbindung verbunden sind, und
• das Steuerungsverfahren nach einem der Ansprüche 1 bis 9 wenigstens teilweise auf dem mobilen Endgerät (130) abläuft.

12. System nach Anspruch 11, **dadurch gekennzeichnet, dass** mittels des mobilen Endgeräts wenigstens
• der Zielzeitpunkt, zu dem der Energiespeicher insbesondere mit einem vorgegebenen Beladungszustand geladen sein soll, und/oder
• einen vorgegebenen minimalen und/oder maximalen Beladungszustand, und/oder
• eine Ladedauer, und/oder
• einen Beladungsschwellenwert für die Änderung der Ladestrategie, und/oder
• einen Betriebsparameter des Energiespeichers, und/oder
• eine bauliche Eigenschaft des Energiespeichers, und/oder
• eine bauliche Eigenschaft der Ladevorrichtung, und/oder
• eine Entnahmehistorie des Energiespeichers, und/oder
• eine Nutzungshistorie des Energiespeichers, und/oder
• ein Entnahmewunsch der Energie, und/oder
• ein Grad der Optimierung der Ladestrategie
als Information erfasst und/oder ausgewählt werden kann.

13. System nach Anspruch 11 oder 12, **dadurch gekennzeichnet, dass** das mobile Endgerät (130) basierend auf den erfassten Informationen die Ladestrategie festlegt und an die Ladevorrichtung sendet, wobei insbesondere vorgesehen ist, dass das mobile Endgerät (130) zur Festlegung der Ladestrategie Informationen von der Ladevorrichtung und/oder dem Energiespeicher mittels der Verbindung erfasst.

14. System nach Anspruch 11 oder 12, **dadurch gekennzeichnet, dass** das mobile Endgerät (130) die erfassten Informationen über die Verbindung an die Ladevorrichtung sendet und die Ladevorrichtung die Ladestrategie festlegt.
